# EUROPÄISCHE PATENTANMELDUNG

(11) **EP 3 175 749 A1**
(43) Veröffentlichungstag der Anmeldung: **07.06.2017**
(21) Anmeldenummer: 15197380.7
(22) Anmeldetag: 01.12.2015
(51) Int. Cl.: A47J 31/44

(54) **GETRÄNKEZUBEREITUNGSMASCHINE ZUM ZUBEREITEN EINES GETRÄNKS**

(71) Anmelder: Qbo Coffee GmbH, 8304 Wallisellen (CH)
(72) Erfinder: Aschwanden, Ivo, 8003 Zürich (CH); Hilckmann, Marius, 48301 Nottuln (DE); Stein, Robert, 24576 Bad Bramstedt (DE)
(74) Vertreter: Frei Patent Attorneys

(57) **Zusammenfassung**

Eine Getränkezubereitungsmaschine (10) zum Zubereiten eines Getränks aus einer Portionskapsel durch Einleiten einer Extraktionsflüssigkeit in die Portionskapsel, aufweisend ein Gehäuse (17), eine Kapseleinlegeöffnung (11), eine Schliesseinheit (1) und ein Schliesselement (14). Das Gehäuse (17) weist die Kapseleinlegeöffnung (11) auf, durch welche die Portionskapsel in das Kapselerkennungsmodul (5) einlegbar ist. Das Schliesselement (14) ist Teil der Schliesseinheit (1). Es ist manuell zwischen einer offenen Position, in welcher die Kapseleinlegeöffnung (11) zugänglich ist, und einer geschlossenen Position, in welcher das Schliesselement (14) die Kapseleinlegeöffnung (11) verschliesst, bewegbar ist. Die Getränkezubereitungsmaschine (10) ist durch ein Kapselerkennungsmodul (5) gekennzeichnet, das eingerichtet ist, eine Kapselerkennung an einer durch die Kapseleinlegeöffnung eingelegten, sich an einer Kapselerkennungsposition befindenden Portionskapsel anhand von vordefinierten Merkmalen durchzuführen, wobei die Getränkezubereitungsmaschine (10) eingerichtet ist, die Kapselerkennung nach Einnahme der geschlossenen Position durch das Schliesselement (14) automatisch auszulösen

## Beschreibung

Die Erfindung betrifft das Gebiet der Getränkezubereitungsmaschinen zum Zubereiten von Heiss- und/oder Kaltgetränken aus einem in einer Portionskapsel enthaltenen Extraktionsgut, beispielsweise Kaffee. Sie betrifft insbesondere eine Getränkezubereitungsmaschinen, welche eine Schliesseinheit, ein Kapselerkennungsmodul, ein Bedienelement und ein Brühmodul aufweist.

Getränkezubereitungsmaschinen, die ein in eine Portionskapsel eingebrachtes Extraktionsgut verwenden, sind beispielsweise als Kaffee- oder Espressomaschinen bekannt. Ebenso ist es bekannt, die Portionskapsel über eine Kapseleinlegeöffnung in die Getränkezubereitungsmaschine einzubringen. Eine solche Kapseleinlegeöffnung kann durch eine Schliesseinheit, die ihrerseits ein schieb- oder schwenkbares Element aufweist, verschliessbar sein.

Schieb- oder schwenkbare Elemente der genannten Art werden insbesondere bei Getränkezubereitungsmaschinen mit herkömmlichen, d.h. nicht motorisierten, horizontalen Brühmodulen, eingesetzt. Dabei ist das schieb- oder schwenkbare Element mechanisch mit der Brühkammer gekoppelt, so dass das Betätigen des besagten Elements zum Schliessen oder Öffnen der Brühkammer führt.

EP 2 571 404 zeigt eine mechanische Schliesseinheit, bei welchem der Benutzer durch Bewegen eines Griffes die Brühkammer der Getränkezubereitungsmaschine schliesst und gleichzeitig die Kapseleinlegeöffnung verschliesst, indem der Griff diese abdeckt. Durch eine entsprechende entgegengesetzte Bewegung wird die Brühkammer wieder geöffnet und die Kapseleinlegeöffnung wieder zugänglich gemacht.

Bei Getränkezubereitungsmaschinen mit motorisierten Brühmodulen findet das Verschliessen der Kapseleinlegeöffnung in der Regel über eine Abdeckung statt, welche z.B. durch Knopfdruck bedient werden kann.

WO 2012/093107 zeigt eine Getränkezubereitungsmaschine, bei welcher ein motorisiertes Brühmodul mit einer manuell bedienbaren Abdeckung kombiniert wird und bei welcher das Verschliessen der Abdeckung durch einen Sensor festgestellt wird und ein Zufahren der Brühkammer bewirkt. Dabei ist die Abdeckung als eine seitlich geführte, entlang des Gehäuses der Getränkezubereitungsmaschinen schiebbare Platte ausgelegt, welche während des Brühvorgangs sowie während des Öffnens und Schliessens des Brühvorgangs arretiert ist.

Die Verwendungsmöglichkeiten dieser Ansätze sind beschränkt auf die entsprechenden spezifischen Lösungen. Es wäre wünschenswert, Ansätze zur Verfügung zu stellen, welche den Bedienkomfort wie auch die Sicherheit weiter verbessern.

Es ist folglich eine Aufgabe der Erfindung, eine Getränkezubereitungsmaschine zur Verfügung zu stellen, welche Nachteile des Standes der Technik überwindet.

Es ist eine weitere Aufgabe, eine Getränkezubereitungsmaschine zur Verfügung zu stellen, welche die Benutzerfreundlichkeit von Getränkezubereitungsmaschinen zum Zubereiten eines Getränks aus einer Portionskapsel weiter erhöht. Es ist insbesondere eine Aufgabe der Erfindung sicherzustellen, dass ein Benutzer mit einem Minimum an Manipulationen ein von ihm gewünschtes Getränk, und nur dieses Getränk, mit hoher Reproduzierbarkeit erhält.

Diese und weitere Aufgaben werden gelöst durch die in den Patentansprüchen definierte Getränkezubereitungsmaschine.

Eine Getränkezubereitungsmaschine der erfindungsgemässen Art ist als Getränkezubereitungsmaschine zum Zubereiten eines Getränks, insbesondere eines Heissgetränks wie Kaffee oder Tee, aus einer Portionskapsel ausgebildet. Die Getränkezubereitungsmaschine weist ein Gehäuse, eine Kapseleinlegeöffnung, eine Schliesseinheit mit einem Schliesselement und ein Kapselerkennungsmodul auf.

Die Kapseleinlegeöffnung ist als eine Öffnung im Gehäuse ausgebildet, durch welche die Portionskapsel in das Kapselerkennungsmodul einlegbar ist.

Das Schliesselement ist ein manuell beweglicher Teil der Schliesseinheit, welches zwischen einer offenen und einer geschlossenen Position bewegbar ist.

In der geschlossenen Position verschliesst das Schliesselement die Kapseleinlegeöffnung. Insbesondere ist das Schliesselement dazu ausgebildet, dass in der geschlossenen Position kein Gegenstand in das Innere der Getränkezubereitungsmaschine gelangt und/oder dass kein Licht in das Innere der Getränkezubereitungsmaschine gelangt. Daher kann zumindest der Teil des Schliesselements aus einem nicht-transparentem Material gefertigt sein. Dies ist insbesondere bei einer auf optischen Merkmalen basierenden Kapselerkennung von Vorteil.

In der offenen Position ist die Kapseleinlegeöffnung zugänglich. Insbesondere lässt das Schliesselement die Kapseleinlegeöffnung soweit unbedeckt, dass die Portionskapsel durch die Kapseleinlegeöffnung einbringbar ist.

Das Kapselerkennungsmodul ist eingerichtet, eine Kapselerkennung an einer Portionskapsel durchzuführen, welche durch die Kapseleinlegeöffnung in eine Kapselerkennungsposition gebracht wurde. Die Kapselerkennung geschieht anhand von vordefinierten Merkmalen.

Mit dem Kapselerkennungsmodul kann - das ist an sich bekannt - insbesondere erstens bestimmt werden, ob die eingelegte Portionskapsel überhaupt für eine Verwendung in der Getränkezubereitungsmaschine geeignet ist oder nicht. Zweitens besteht die Möglichkeit, aufgrund erkannter Kapseleigenschaften an den Benutzer entsprechende Informationen auszugeben, bspw. über ein Display. Es kann beispielsweise der Getränketyp (Kaffee, Tee, etc.), die Sorte (z.B. "100% Arabica"), die empfohlene Zubereitungsart (z.B. "Espresso", "Ristretto" oder "Lungo" etc.) und/oder eine andere Information angezeigt werden. Drittens kann auch das von der Kaffeemaschine für die Brühung verwendete Programm aufgrund der erkannten Kapselsorte gewählt werden, bspw. können der Brühdruck, die Brühdauer sowie eventuell auch die Temperatur und/oder andere Eigenschaften abhängig davon eingestellt werden, ob die eingelegte Portionskapsel für die Zubereitung von z.B. Ristretto, Espresso oder Lungo vorgesehen ist.

Bei den vordefinierten Merkmalen handelt es sich insbesondere um optisch auslesbare Merkmale. Das Kapselerkennungsmodul enthält dann einen optischen Sensor, beispielsweise eine Kamera, zum Auslesen der vordefinierten Merkmale. Es sind aber auch andere Merkmale wie beispielsweise magnetische Eigenschaften oder ein kontaktlos auslesbarer RFID-Chip denkbar.

Erfindungsgemäss ist nun die Getränkezubereitungsmaschine dazu eingerichtet, dass die Kapselerkennung nach Einnahme der geschlossenen Position durch das Schliesselement automatisch stattfindet. Dieses Vorgehen hat im Vergleich zu vom Benutzer ausgelösten Vorgängen einerseits den Vorteil, dass bei Kapselerkennungsmodulen mit optischem Sensor verhindert wird, dass Streulicht durch die Kapseleinlegeöffnung in das Kapselerkennungsmodul gelangt - die Kapselerkennung ist an ein Schliessen und damit auch Abdunkeln des Kapselerkennungsmoduls gekoppelt. Für das Auslesen kann das Kapselerkennungsmodul dafür eine eigene Lichtquelle aufweisen, welche eine definierte Lichtverteilung auf der Portionskapsel erzeugt. Ein weiterer Vorteil ergibt sich aus der intuitiven Bedienung: der Benutzer merkt gar nicht unbedingt, dass er einen Kapselerkennungsvorgang auslöst.

Insbesondere umfassen die vordefinierten Merkmale eine Codierung, die Angaben zu einer oder mehreren Kapseleigenschaften beinhaltet. Beispiele solcher Kapseleigenschaften wurden bereits genannt. Es sind dies insbesondere Angaben zur Eignung einer Verwendung der Portionskapsel in der Getränkezubereitungsmaschine und kapselbezogene Angaben, Angaben wie beispielsweise Getränketyp, Sorte und/oder empfohlene Zubereitungsart.

Geeignete optisch auslesbare Merkmale sind beispielsweise ein Strichcode, ein 2D-MatrixCode (bspw. QR-Code oder Aztec-Code), ein Piktogramm (Icon) und/oder auch eine bestimmte Farbgebung. Auch ein Code gemäss einer der europäischen Patentanmeldungen 14 197 487.3, 14 197 488.1 und/oder 14 197 489.9 kommt in Frage.

In einer Ausführungsform der Getränkezubereitungsmaschine weist diese einen Sensor auf, mit welchem die Einnahme der geschlossenen Position durch das Schliesselement oder der Übergang desselben in die geschlossene Position feststellbar ist. Das Feststellen der geschlossenen Position beziehungsweise des Übergangs in die geschlossene Position dient insbesondere dazu, die Kapselerkennung auszulösen.

Der Sensor kann beispielsweise als Schalter ausgebildet sein, welcher mit einem Bereich der Schliesseinheit bei Einnahme der geschlossenen Position durch das Schliesselement interagiert. Insbesondere bewegt sich dieser Bereich der Schliesseinheit in reproduzierbarer Weise in Abhängigkeit der Bewegung des Schliesselements.

In einer Ausführungsform weist die Getränkezubereitungsmaschine eine Anzeigeeinrichtung, beispielsweise ein Display und/oder Knöpfe mit individuell wechselbarem Farbeindruck, und ein Bedienelement, beispielsweise ein Jog Dial und/oder ein Bildschirm, auf. Anzeigeeinrichtung und Bedienelement können auch durch ein Element, beispielsweise ein Touchscreen oder die Knöpfe mit individuell wechselbarem Farbeindruck, realisiert sein.

Die Getränkezubereitungsmaschine kann eingerichtet sein, über die Anzeigeeinrichtung eine Anzahl an über das Bedienelement auswählbaren Brühprogrammen anzuzeigen. Dabei hängt die Anzahl auswählbarer Brühprogramme von einem Resultat der Kapselerkennung ab.

Zumindest die auswählbaren Brühprogramme können dabei auf diejenigen Brühprogramme beschränkt sein, welche zum Zeitpunkt der Wahl von der Getränkezubereitungsmaschine zubereitbar sind. Welche Brühprogramme zum momentanen Zeitpunkt zubereitbar und damit auswählbar sind, hängt vom Zustand der Getränkezubereitungsmaschine und ihrer Module, insbesondere von Füllständen, und/oder dem Resultat der Kapselerkennung ab.

In einer Ausführungsform weist die Getränkezubereitungsmaschine ferner ein Milchmodul auf, wobei der Zustand des Milchmoduls ebenfalls die Anzahl auswählbarer Brühprogramme beeinflussen kann. Der Zustand des Milchmoduls ist insbesondere durch dessen Anschluss beziehungsweise Nicht-Anschluss an die Getränkezubereitungsmaschine sowie eventuell durch einen Füllstand definiert.

In einer Ausführungsform der Getränkezubereitungsmaschine ist das Schliesselement auch während eines zur Zubereiten des Getränks dienenden Brühprozesses aus der geschlossenen Position bewegbar, d.h. das Schliesselement ist während des Brühprozesses nicht arretiert. Dabei führt ein Bewegen des Schliesselements während des Brühprozesses beispielsweise zum Stoppen des Brühprozesses - in diesen Ausführungsformen steht dem Benutzer also eine sehr intuitive Möglichkeit, den Brühprozess zu stoppen, zur Verfügung.

Über eine entsprechende Programmierung der Getränkezubereitungsmaschine kann festgelegt sein, ob das Bewegen des Schliesselements während des Brühprozesses denselben nur unterbricht, d.h. ob er nach neuerlicher Einnahme der geschlossenen Position durch das Schliesselement fortgesetzt wird, oder ob der Brühprozess als beendet gilt.

Die Getränkezubereitungsmaschine kann in an sich bekannter Art ein Brühmodul aufweisen. Dieses umfasst ein erstes Brühmodulteil und ein relativ zu diesem bewegbares zweites Brühmodulteil. Erstes und zweites Brühmodulteil sind dazu ausgebildet eine Brühkammer zu bilden, welche die sich in einer Brühposition befindende Portionskapsel beim Brühvorgang mindestens teilweise umgibt. Das Brühmodul ist dazu eingerichtet, durch das Einleiten einer Extraktionsflüssigkeit in die Portionskapsel ein Brühgetränk zu brühen und dieses aus dem Brühmodul abzuleiten. Die Bewegung des zweiten Brühmodulteils kann mechanisch von der Bewegung des Schliesselements entkoppelt sein. Das heisst, dass eine Bewegung des Schliesselements genauso wenig zu einer unmittelbaren Bewegung des zweiten Brühmodulteils führt, wie eine Bewegung des zweiten Brühmodulteils zu einer Bewegung des Schliesselements. Eine solche mechanische Entkoppelung von Schliesselement und zweitem Brühmodulteil erlaubt es auch, einen über das Bewegen des Schliesselements aus der geschlossenen Position gestoppten Brühprozess fortzusetzen, nachdem das Schliesselement wieder in die geschlossene Position gebracht wurde.

Die besagte mechanische Entkopplung ermöglicht auch, alternativ zum vorstehend erwähnten Ansatz, durch Öffnen der Schliesseinheit den Brühprozess zu unterbrechen, das Schliesselement in die offene Position zu bringen, ohne den laufenden Brühprozess zu unterbrechen. Insbesondere bei Ausführungsformen, bei welchen die Portionskapsel über die Kapseleinlegeöffnung nicht unmittelbar in eine Position zwischen erstem und zweitem Brühmodulteil gebracht wird und die Kapselerkennungsposition von der Brühposition verschieden ist, kann dies vorteilhaft sein und beispielsweise zu einer schnelleren Abfolge von aufeinander folgenden Getränkezubereitungen führen.

Weiterhin kann die Einnahme der geschlossenen Position durch das Schliesselement eine Voraussetzung für die Bewegung des zweiten Brühmodulteils sein. Dadurch ist die Sicherheit des Benutzers auch für den Fall gewährt, dass das Schliesselement während des Schliessens oder Öffnens der Brühkammer aus seiner geschlossenen Position bewegt wird.

Die Kapselerkennungsposition und die Brühposition können voneinander verschieden sein. Nach erfolgter Kapselerkennung ist folglich ein Transfer der Portionskapsel von der Kapselerkennungsposition in die Brühposition nötig. Insbesondere kann vorgesehen sein, dass besagter Transfer ein Auslösen durch den Benutzer voraussetzt, beispielsweise durch Auswahl eines nach der Kapselerkennung auswählbaren Brühprogramms.

Alternativ kann ein solcher Transfer auch auf eine der folgenden Weisen ausgelöst werden:
- Der Benutzer hat vor der Kapselerkennung ein auswählbares Rezept ausgewählt und die Kapselerkennung hat eine zur Wahl passende Portionskapsel ergeben;
- Der Benutzer hat vor dem Einlegen der Portionskapsel in die Kapseleinlegeöffnung oder vor der Kapselerkennung sein Einverständnis zu einem automatischen Start des Brühvorgangs ohne Kapselerkennung beziehungsweise ohne Berücksichtigung der Kapselerkennung gegeben;
- Der Benutzer hat nach der Kapselerkennung sein Einverständnis zu einem Starts des Brühvorgangs ohne Berücksichtigung der Kapselerkennung gegeben.

Ergänzend kann ein Abschluss einer der Getränkezubereitung vorausgehenden Spülung Voraussetzung für besagten Transfer sein.

In einer Ausführungsform ist die Portionskapsel nach der Kapselerkennung, aber vor dem Schliessen der Brühkammer über die Kapseleinlegeöffnung wieder aus der Getränkezubereitungsmaschine entfernbar. Da die Portionskapsel bis zum Schliessen der Brühkammer unversehrt bleibt, kann folglich die intakte Portionskapsel zur späteren Verwendung der Getränkezubereitungsmaschine wieder entnommen werden. Wenn wie erwähnt die Kapselerkennungsposition von der Brühposition verschieden ist, kann eine solche Entnahme vor dem Transfer in die Brühkammer möglich sein - bspw. wenn der Benutzer über die Anzeigeeinrichtung erkennt, dass die Kapselsorte nicht dafür geeignet ist, ein von ihm gewünschtes Getränk zuzubereiten.

Insbesondere kann die Getränkezubereitungsmaschine eine von der Kapseleinlegeöffnung her zugängliche Griffmulde aufweisen. Diese erlaubt es dem Benutzer, die sich in der Kapselerkennungsposition befindende Portionskapsel zu greifen und über die Kapseleinlegeöffnung zu entfernen.

Die Möglichkeit einer Entfernung der Portionskapsel nach der Kapselerkennung kann von Voreinstellungen abhängig gemacht sein und bspw. einstellbar uneingeschränkt, zeitlich beschränkt oder gar nicht möglich sein.

Es ist ein wesentlicher Vorteil einer erfindungsgemässen Getränkezubereitungsmaschine, dass diese eine Auswahl eines bestimmten Zubereitungsprozesses mit angepassten Parametern wie Druck, Temperatur, Wassermenge, gegebenenfalls Milchmenge etc. nach Einlegen der Portionskapsel erlaubt. Wenn die Kapselerkennungsposition von der Brühposition verschieden ist, kann nach Einlegen der Portionskapsel beispielsweise je nach gewünschtem Getränk und/oder je nach Vorgeschichte auch eine Spülung der Brühkammer ausgelöst werden.

Insbesondere kann der Zubereitungsprozess in Abhängigkeit der Resultate der Kapselerkennung gewählt werden.

In einer Ausführungsform ist das Schliesselement ein Bedienhebel, der um eine Drehachse schwenkbar ist.

Insbesondere ist der Bedienhebel dazu ausgebildet, dass er einerseits in der geschlossenen Position die Kapseleinlegeöffnung verschliesst und andererseits in jeder Position gut greif- und führbar ist.

Alternativ kann das Schliesselement ein Schieber sein, welcher entlang des Gehäuses geführt ist und von einer ersten Position, in welcher der Schieber die Kapseleinlegeöffnung nicht verschliesst, in eine zweite Position, in welcher der Schieber über der Kapseleinlegeöffnung zu liegen kommt, bewegbar ist.

In Ausführungsformen, in welchen das Schliesselement ein Bedienhebel ist, kann die Schliesseinheit ferner einen Nocken aufweisen, die ebenfalls um die Drehachse bewegbar ist und die zumindest in der geschlossenen Position der Schliesseinheit mit dem Sensor auf eine Weise interagiert, dass über den Sensor, beziehungsweise ein Ausgangssignal des Sensors, der Übergang in die geschlossene Position und/oder der Zustand der geschlossenen Position feststellbar ist.

Nocken und Bedienhebel können aus einem Stück gefertigt sein. In diesem Fall bilden Nocken und Bedienhebel eine Wippe, welche in der geschlossenen Position mit dem Sensor interagiert.

Nocken und Bedienhebel können zwei unterschiedliche Teile der Schliesseinheit sein, wobei die Bewegung des Nockens eindeutig und wiederholbar mit der Bewegung des Bedienhebels in Beziehung steht.

Das Schliesselement kann durch Anlegen einer Kraft in die geschlossene Position bewegbar und aus dieser wegbewegbar. Insbesondere kann die Schliesseinheit dazu eingerichtet sein, dass das Schliesselement kontinuierlich bewegbar ist. Die kontinuierliche Bewegung kann durch ein, gegebenenfalls sprunghaftes, Einreisten an charakteristischen Position, insbesondere in der geschlossenen Position und in der offenen Position unterbrochen oder abgeschlossen sein.

In einer Ausführungsform weist die Schliesseinheit ferner ein Widerstandselement auf, um dem Benutzer, welcher die Kraft zum Bewegen des Schliesselements aufbringt, ein haptisches Feedback zu geben, d.h. das Widerstandselement ist so ausgebildet, dass es einer Bewegung des Schliesselements einen Widerstand entgegenbringt, der von einer Position des Schliesselements abhängt, wodurch auch die zum Bewegen des Schliesselements nötige Kraft von einer Position des Schliesselements abhängt.

Ist beispielsweise die Schliesseinheit als Bedienhebel realisiert, der um eine Drehachse schwenkbar ist, kann die Position des Bedienhebels durch seine über seine Bewegung um die Drehachse relativ zur geschlossenen Position gegebene Winkelposition gegeben sein. In diesem Fall variiert der Widerstand in Abhängigkeit der Winkelposition.

Insbesondere ist der Widerstand dahingehend ausgelegt, dass das haptische Feedback Vorgänge, welche für Getränkezubereitungsmaschinen mit manuell verschliessbarer Brühkammer charakteristisch sind, simuliert. Zu diesen Vorgängen gehören beispielsweise das Anstechen der Portionskapsel und/oder das Schliessen der Brühkammer.

In einer Ausführungsform wird der Widerstand durch Reibung und/oder elastische Deformation hervorgerufen. Dazu kann das Widerstandselement eine Feder sein, die beim Schliessen entgegen ihrer Federkraft deformiert wird und/oder entlang derer ein Element der Schliesseinheit schleift. In einem Ausführungsbeispiel ist das Widerstandselement ein geschwungenes Federblech, entlang welchem ein Teil der Schliesseinheit fährt.

Alternativ oder ergänzend können Ausführungsformen, welche ein erstes Brühmodulteil und ein relativ zu diesem bewegbares zweites Brühmodulteil aufweisen, dazu eingerichtet sein, eine gebrauchte Portionskapsel ohne Betätigung des Schliesselements aus dem Brühmodul auszuwerfen, d.h. die Getränkezubereitungsmaschine ist programmiert, nach Abschluss des Brühprozesses die Brühkammer zu öffnen bis die verbrauchte Portionskapsel nach unten in den Kapselbehälter fällt, auch wenn der Benutzer weder das Schliesselement betätigt noch eine dedizierte Eingabe macht.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig.1: Eine Ansicht einer Getränkezubereitungsmaschine, welche unter anderem ein Kapselerkennungsmodul, ein Schliesselement, ein Milchmodul, eine Anzeigeeinrichtung und ein Bedienelement aufweist;
- Fig. 2: Einen Querschnitt eines Bereichs einer Getränkezubereitungsmaschine mit einer eingebauter Schliesseinheit dessen Schliesselement in einer offenen Position ist und mit einem Sensor zur Feststellung der Einnahme einer geschlossenen Position durch das Schliesselement;
- Fig.3: Einen Querschnitt des Bereichs der Getränkezubereitungsmaschine gemäss Figur 2 mit Schliesselement in geschlossener Position;
- Fig. 4: Eine Detailansicht einer Ausführungsform eines Widerstandselements zur Erzeugung eines haptischen Feedbacks.

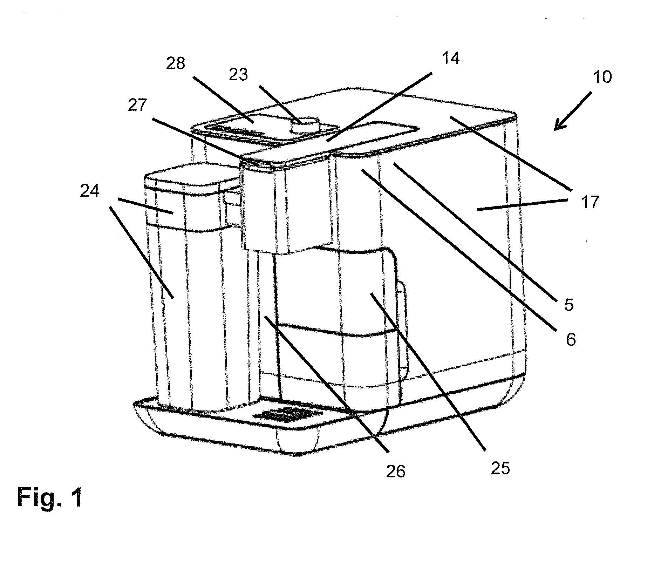

**Figur 1** zeigt eine Aussenansicht einer Getränkezubereitungsmaschine 10 zum Zubereiten eines Getränks aus einer Portionskapsel, welche neben einem als Bedienhebel 14 realisierten Schliesselement in geschlossener Position, ein Kapselerkennungsmodul 5, ein Gehäuse 17 aufweisend eine Kapseleinlegeöffnung 11, ein Brühmodul 6, ein Bedienelement 23, eine Anzeigeeinrichtung 28, ein Milchmodul 24, einen Auffangbehälter 25 und einen Wassertank 26 (teilweise von Milchmodul 24 verdeckt) aufweist.

Der Bedienhebel 14 ist dazu ausgebildet, in der geschlossenen Position mit dem oberen, horizontalen Teil des Gehäuses 17 eine horizontale Fläche zu bildet und die Kapseleinlegeöffnung 11 sowie den oberen Bereich des Kapselerkennungsmoduls 5 (Bezugszeichen gibt ungefähre Position im Innern der Getränkezubereitungsmaschine 10 wieder) vollständig zu bedeckt. Zur besseren manuellen Bedienbarkeit des Bedienhebels 14 weisen Bedienhebel 14 und an ihn angrenzende Bereiche des Gehäuses 17 Aussparungen 27 auf.

Das Brühmodul 6 (Bezugszeichen gibt ungefähre Position im Innern der Getränkezubereitungsmaschine 10 wieder) ist direkt unterhalb des Kapselerkennungsmoduls 5 angeordnet.

Milchmodul 24, Wassertank 26 und Auffangbehälter 25 sind Beispiele von Modulen der Getränkezubereitungsmaschine 10, welche durch Ihren Füllstand und/oder ihre Anwesenheit, beziehungsweise durch ihr Fehlen, die durch den Benutzer auswählbaren Brühprogramme für Getränke, welche durch die Getränkezubereitungsmaschine 10 in ihrem momentanen Zustand zubereitbar sind, beeinflussen.

Die auswählbaren Brühprogramme sind auf der Anzeigeeinrichtung 28, welches ein Display ist, sichtbar und über das Bedienelement 23, welches hier ein Jog Dial ist, auswählbar. Auch eine Bedienung über ein Touchscreen-Bedienelement, welches Anzeigeeinrichtung 28 und Bedienelement 23 vereint, oder remote über ein mit der Getränkezubereitungsmaschine 10 kommunizierendes, mobiles Gerät, wobei die Kommunikation insbesondere kabellos stattfindet, ist denkbar.

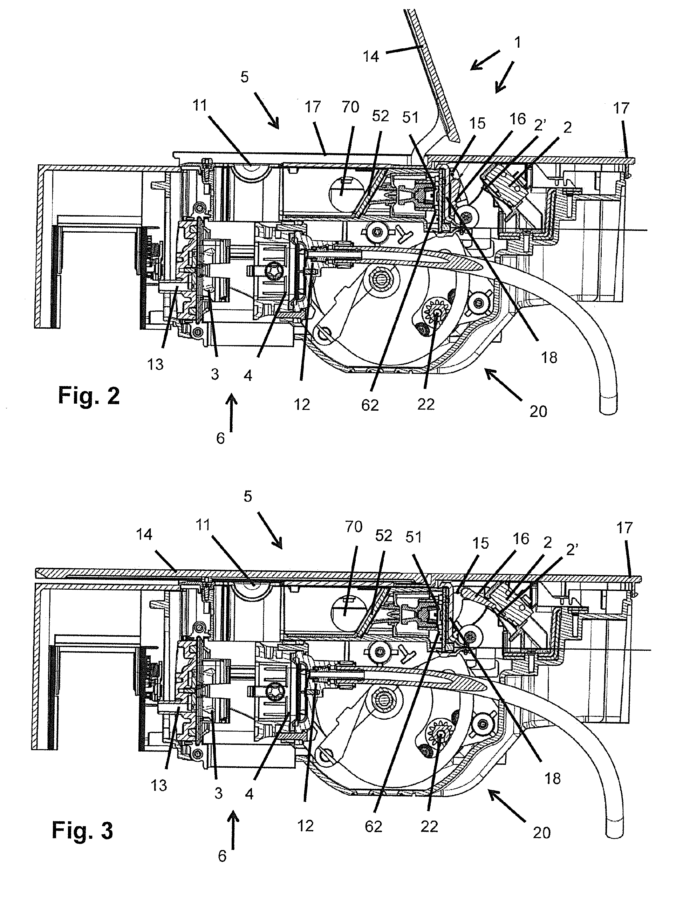

**Figur 2** zeigt den für die Erfindung relevanten Teilbereich einer Getränkezubereitungsmaschine 10 zum Zubereiten eines Getränks aus einer Portionskapsel. Dargestellt sind unter anderem die funktionalen Einheiten Kapselerkennungsmodul 5, Schliesseinheit 1, Brühmodul 6 und Antriebsmechanismus 20.

In der gezeigten Ausführungsform ist das Kapselerkennungsmodul 5 in einer Weise direkt unterhalb des oberen, horizontalen Teils des Gehäuses 17 angeordnet, dass über die Kapseleinlegeöffnung 11 eine Portionskapsel in eine Kapselerkennungsposition des Kapselerkennungsmoduls 5 einlegbar ist.

Das Brühmodul 6 liegt unterhalb des Kapselerkennungsmoduls 5. In der gezeigten Ausführungsform weist das Brühmodul 6 ein erstes Brühmodulteil 3, welches fest mit dem Gehäuse 17 verbunden ist, und ein zweites Brühmodulteil 4, welches relativ zum ersten Brühmodulteil 3 bewegbar ist, auf. Die Lage des Brühmoduls 6 ist so gewählt, dass eine sich in der Kapselerkennungsposition befindliche Portionskapsel durch das zweite Brühmodulteil 4 in der Kapselerkennungsposition gehalten wird und dass die in der Kapselerkennungsposition befindliche Portionskapsel in eine Brühposition zwischen den beiden Brühmodulteilen gelangen kann, sofern das zweite Brühmodulteil 4 eine Position einnimmt, die diesen Transfer der Portionskapsel vom Kapselerkennungsmodul 5 in das Brühmodul 6 nicht mehr verhindert.

Zur besseren Orientierung zeigt **Figur 2** noch zwei weitere Bauteile des Brühmoduls 6, nämlich den Injektor 12 und die Ausleitvorrichtung 13.

Der Antriebsmechanismus 20 schliesst in der gezeigten Ausführungsform der Getränkezubereitungsmaschine 10 gegen die Rückseite des Gehäuses 17 hin an das Brühmodul 5 an. Der Antriebsmechanismus 20 wird von einem elektrischen Antrieb 22 (einem Motor) angetrieben. Eine Beschreibung des Antriebsmechanismus 20 und insbesondere eine Darstellung eines möglichen Prinzips, mit dem der Transfer von der Kapselerkennungsposition in die Brühposition geregelt wird, findet sich zum Beispiel der europäischen Patentanmeldung 14 195 680.5.

Die gehäuseinternen Teile der Schliesseinheit 1 sind in der gezeigten Ausführungsform der Getränkezubereitungsmaschine 10 rückseitig zum Kapselerkennungsmodul 5 angeordnet. Insbesondere sind die gehäuseinternen Teile der Schliesseinheit 1 rückseitig zu einer das Kapselerkennungsmodul 5 begrenzenden Platine 18, welche die Sensorelektronik des Kapselerkennungsmoduls 5 aufweist, angeordnet.

Die gezeigte Schliesseinheit 1 umfasst einen Nocken 16 sowie den Bedienhebel 14 auf, die drehfest miteinander verbunden und gemeinsam um eine Drehachse 15 schwenkbar sind.

In der gezeigten Ausführungsform ist der Bedienhebel 14 auf eine Weise um die Drehachse 15 bewegbar und dazu ausgebildet, dass er wie in **Figur 1** gezeigt eine Position einnehmen kann, in welcher er mit dem oberen, horizontalen Teil des Gehäuses 17 eine horizontale Fläche bilden kann, und dabei die Kapseleinlegeöffnung 11 vollständig bedeckt. Dadurch wird die zur Kapselerkennung basierend auf der Bestimmung von optisch auslesbaren Merkmalen nötige Verdunkelung innerhalb des Kapselerkennungsmoduls 5 erreicht. Ferner ist der Bedienhebel 14 dazu ausgebildet, in jeder Position gut greif- und bedienbar zu sein.

Um die Einnahme der geschlossenen Position durch den Bedienhebel 14 festzustellen und die Kapselerkennung automatisch auszulösen, weist die Getränkezubereitungsmaschine 10 ferner einen Mikroschalter 2 mit einer Blechlasche 2' auf. Mikroschalter 2 und Blechlasche 2' sind so im Gehäuse 17 angeordnet, dass der Nocken 16 in geschlossener Position des Bedienhebels 14 gegen die Blechlasche 2' drückt, wodurch der Mikroschalter 2 die Einnahme der geschlossenen Position detektiert, was durch eine Maschinensteuerung auslesbar ist.

Das gezeigte Kapselerkennungsmodul 5 weist einen Kamerasensor 51, ein Kapselerkennungsfenster 52, eine Lichtquelle 62 und einen Lüfter 70 auf. Kapselerkennungsmodule für Getränkezubereitungsmaschinen zum Zubereiten eines Getränks aus einer Portionskapsel sind in der europäischen Patentanmeldung 14 195 680.5 im Detail beschrieben.

**Figur 3** zeigt den in **Figur 2** dargestellten Bereich der Getränkezubereitungsmaschine 10 mit dem als Bedienhebel 14 realisierten Schliesselement 14 in geschlossener Position. Daraus ist ersichtlich, wie der Bedienhebel 14 in eine Aussparung des Gehäuses 17 greift und dabei die Kapseleinlegeöffnung 11 verschliesst.

Ferner zeigt **Figur 3****,** wie der Nocken 16 in der geschlossenen Position des Bedienhebels 14 gegen die Blechlasche 2' des Mikroschalters 2 drückt, wodurch feststallbar ist, dass die geschlossene Position eingenommen wird beziehungsweise dass ein Übergang in die geschlossene Position stattfindet. Letzteres löst die Kapselerkennung durch das Kapselerkennungsmodul 5 automatisch aus. In Figur 3 ist die Position der Blechlasche 2' nicht ganz korrekt links vom Nocken 16 statt zwischen Nocken 16 und Sensor 2 dargestellt.

Die in die gezeigte Getränkezubereitungsmaschine 10 eingebaute Schliesseinheit 1 weist ferner ein Widerstandselement zur Erzeugung eines haptischen Feedbacks auf. Aufgabe des Widerstandselements ist es, einen Widerstand gegen das Bewegen des Bedienhebels 14 zu erzeugen, welcher in Abhängigkeit der Position des Bedienhebels 14 variiert.

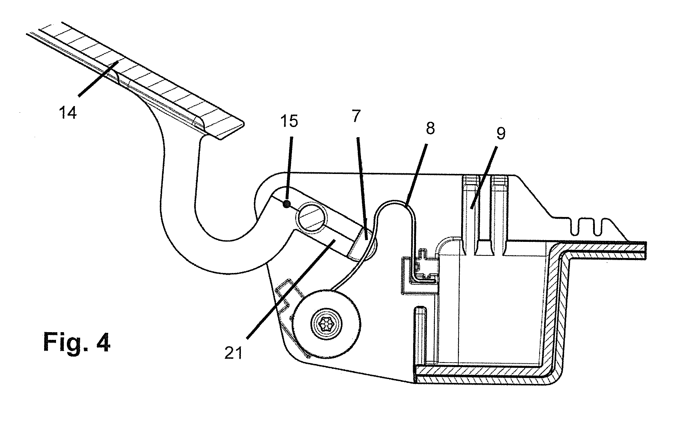

In **Figur 4** ist eine konkrete Realisierung eines solchen Widerstandselements gezeigt. Das Widerstandselement weist ein gebogenes Federblech 8 und eine Widerstandshalterung 9 auf. Ferner weist der Bedienhebel 14 nahe der Drehachse 15 zwei gabelförmige Widerstandsfortsätze 21 auf (nur der hintere der beiden Widerstandsfortsätze 21 ist gezeigt). Am Ende dieser beiden Widerstandsfortsätze 21 sind Kunststoffkappen 7 angebracht, welche gegen das gebogene Federblech 8 drücken.

Aufgrund des Drucks zwischen Kunststoffkappen 7 und Federblech 8 entsteht bei der Bewegung des Bedienhebels 14 Reibung und somit ein durch den Benutzer wahrnehmbarer Widerstand; ausserdem wird das Federblech durch die Widerstandsfortsätze 21 entgegen ihrer Federkraft besonders stark deformiert, wenn der Bedienhebel 14 sich der geschlossenen Position nähert. Sobald der Federbogen überwunden ist, spürt der Benutzer ein ruckartiges Nachgeben, ähnlich einem Einrasten. Über die Kontur des Federblechs 8, das heisst über seine lokale Biegung, ist der Anpressdruck und somit die Stärke der Reibung, beziehungsweise der Widerstand, einstellbar. Damit ist der Widerstand über den Bewegungsbereich des Bedienhebels 14 in beliebiger Weise variierbar. Insbesondere kann ein variierender Widerstand generiert werden, welcher den mechanischen Widerstand einer Brühgruppe imitiert.

### Bezugszeichenliste

- 1: Schliesseinheit
- 2: Sensor/Mikroschalter
- 2': Blechlasche
- 3: erstes Brühmodulteil
- 4: zweites Brühmodulteil
- 5: Kapselerkennungsmodul
- 6: Brühmodul
- 7: Kunststoffkappe
- 8: Federblech
- 9: Widerstandshalterung
- 10: Getränkezubereitungsmaschine
- 11: Kapseleinlegeöffnung
- 12: Injektor (Wasserzuführung)
- 13: Ausleitvorrichtung (Getränkeauslauf)
- 14: Bedienhebel
- 15: Drehachse
- 16: Nocken
- 17: Gehäuse
- 18: Platine (PCB)
- 20: Antriebsmechanismus
- 21: Widerstandsfortsatz
- 22: Elektrischer Antrieb
- 23: Bedienelement
- 24: Milchmodul
- 25: Auffangbehälter
- 26: Wassertank
- 27: Aussparungen
- 28: Anzeigeeinrichtung
- 51: Kamerasensor
- 52: Kapselerkennungsfenster
- 62: Lichtquelle
- 70: Lüfter

## Patentansprüche

1. Getränkezubereitungsmaschine (10) zum Zubereiten eines Getränks aus einer Portionskapsel durch Einleiten einer Extraktionsflüssigkeit in die Portionskapsel, aufweisend
- ein Gehäuse (17), welches eine Kapseleinlegeöffnung (11) aufweist, durch welche die Portionskapsel in die Getränkezubereitungsmaschine (10) einlegbar ist;
- eine Schliesseinheit (1) mit einem Schliesselement (14), das manuell zwischen einer offenen Position, in welcher die Kapseleinlegeöffnung (11) zugänglich ist, und einer geschlossenen Position, in welcher das Schliesselement (14) die Kapseleinlegeöffnung (11) verschliesst, bewegbar ist,
**gekennzeichnet durch** ein Kapselerkennungsmodul (5), das eingerichtet ist, eine Kapselerkennung an einer **durch** die Kapseleinlegeöffnung eingelegten, sich an einer Kapselerkennungsposition befindenden Portionskapsel anhand von vordefinierten Merkmalen durchzuführen, wobei die Getränkezubereitungsmaschine (10) eingerichtet ist, die Kapselerkennung nach Einnahme der geschlossenen Position **durch** das Schliesselement (14) automatisch auszulösen.

2. Getränkezubereitungsmaschine (10) nach Anspruch 1, aufweisend einen Sensor (2), welcher dazu ausgebildet ist, die Einnahme der geschlossenen Position durch das Schliesselement (14) festzustellen.

3. Getränkezubereitungsmaschine (10) nach Anspruch 1 oder 2, ferner aufweisend eine Anzeigeeinrichtung (28) und ein Bedienelement (23), wobei die Getränkezubereitungsmaschine eingerichtet ist, über die Anzeigeeinrichtung abhängig von einem Resultat der Kapselerkennung eine Anzahl an über das Bedienelement auswählbaren Brühprogrammen anzuzeigen.

4. Getränkezubereitungsmaschine (10) nach Anspruch 3, ferner aufweisend ein Milchmodul (24), wobei die Getränkezubereitungsmaschine eingerichtet ist, die auswählbaren Brühprogramme an die Anwesenheit oder Nichtanwesenheit des Michmoduls und/oder einen Milchmodul-Füllstand anzupassen.

5. Getränkezubereitungsmaschine (10) nach einem der vorangehenden Ansprüche, wobei das Schliesselement (14) während eines zur Zubereiten des Getränks dienenden Brühprozesses aus der geschlossenen Position bewegbar ist, wobei dieses Bewegen des Schliesselements (14) den Brühvorgang stoppt.

6. Getränkezubereitungsmaschine (10) nach einem der vorangehenden Ansprüche, aufweisend ein Brühmodul (6) mit einem ersten Brühmodulteil (3) und einem relativ zu diesem bewegbaren zweites Brühmodulteil (4), wobei durch das erste und zweite Brühmodulteil eine Brühkammer bildbar ist, und wobei die Bewegung des zweiten Brühmodulteils (4) relativ zum ersten Brühmodulteil (3) und die Bewegung des Schliesselements (14) voneinander mechanisch entkoppelt sind.

7. Getränkezubereitungsmaschine nach Anspruch 6, die eingerichtet ist, nach erfolgter Kapselerkennung eine Entnahme der Portionskapsel durch die Kapseleinlegeöffnung zu ermöglichen, bevor die Brühkammer geschlossen wird.

8. Getränkezubereitungsmaschine nach Anspruch 7, aufweisend eine von der Kapseleinlegeöffnung her zugängliche Griffmulde zur Entnahme der sich an der Kapselerkennungsposition befindenden Portionskapsel.

9. Getränkezubereitungsmaschine nach einem der Ansprüche 6-8, wobei die Kapselerkennungsposition und eine Brühposition, in welcher sich die Portionskapsel bei geschlossener Brühkammer befindet, voneinander verschieden sind, und wobei ein Transfer der Portionskapsel von der Kapselerkennungsposition in die Brühposition ein Auslösen durch den Benutzer voraussetzt.

10. Getränkezubereitungsmaschine (10) nach einem der vorangehenden Ansprüche, wobei die vordefinierten Merkmale, anhand welcher die Kapselerkennung durchgeführt wird, eine Codierung umfasst, die Angaben zu einer oder mehreren Kapseleigenschaften beinhaltet.

11. Getränkezubereitungsmaschine (10) nach einem der vorangehenden Ansprüche, wobei die vordefinierten Merkmale, anhand welcher die Kapselerkennung durchgeführt wird, optisch auslesbare Merkmale sind und das Kapselerkennungsmodul einen optischen Sensor (51) zum Auslesen der vordefinierten Merkmale aufweist.

12. Getränkezubereitungsmaschine (10) nach einem der vorangehenden Ansprüche, wobei das Schliesselement (14) ein Bedienhebel ist, der um eine Drehachse (15) schwenkbar ist.

13. Getränkezubereitungsmaschine (10) nach einem der vorangehenden Ansprüche, wobei das Schliesselement (14) durch Anlegen einer Kraft bewegbar ist und wobei die Schliesseinheit (1) ferner ein Widerstandselement (8) aufweist, welches einer Bewegung des Schliesselements (14) einen Widerstand entgegenbringt, der von einer Position des Schliesselements (14) abhängt.

14. Getränkezubereitungsmaschine (10) nach Anspruch 13, wobei der Widerstand auf Reibung und/oder elastischer Verformung beruht.

15. Getränkezubereitungsmaschine (10) nach einem der vorangehenden Ansprüche, wobei das Brühmodul (6) ein erstes Brühmodulteil (3) und ein relativ zu diesem bewegbares zweites Brühmodulteil (4) aufweist, wobei durch das erste und zweite Brühmodulteil eine Brühkammer bildbar ist, und wobei die Getränkezubereitungsmaschine (10) ferner dazu eingerichtet ist, eine gebrauchte Portionskapsel ohne Betätigung des Schliesselements (14) aus dem Brühmodul (6) auszuwerfen.
